(19) Europäisches Patentamt
European Patent Office
Office européen des brevets

(11) EP 0 858 985 A2

(12) EUROPEAN PATENT APPLICATION

(43) Date of publication:
**19.08.1998 Bulletin 1998/34**

(51) Int. Cl.[6]: **C05C 5/04**, C05C 5/00

(21) Application number: **97117779.5**

(22) Date of filing: **14.10.1997**

(84) Designated Contracting States:
**AT BE CH DE DK ES FI FR GB GR IE IT LI LU MC NL PT SE**

(30) Priority: **18.02.1997 US 801770**

(71) Applicant: **DRAVO LIME COMPANY**
**Pittsburgh Pennsylvania 15222 (US)**

(72) Inventors:
- **Babu, Manyam**
  **Upper St. Clair, PA 15241 (US)**
- **College, John W.**
  **Pittsburgh, PA 15234 (US)**

(74) Representative:
**Grünecker, Kinkeldey,**
**Stockmair & Schwanhäusser**
**Anwaltssozietät**
**Maximilianstrasse 58**
**80538 München (DE)**

# (54) Aqueous alkaline earth nitrate fertilizer composition and process for making same

(57) A fertilizer composition containing an alkaline earth nitrate, such as calcium nitrate or magnesium nitrate is produced by the scrubbing of hot combustion gases to remove sulfur dioxide and nitrogen oxides from the gas. After removal of sulfur dioxide from a gas stream, a humidified gas stream containing $NO_x$ is treated to convert the $NO_x$ to nitric acid, and the nitric acid-containing humidified gas stream is contacted with an alkaline earth compound which reacts with nitric acid to form an alkaline earth nitrate in an aqueous effluent, which effluent comprises a fertilizer composition.

EP 0 858 985 A2

## Description

Cross-reference to Related Application

This application is a continuation-in-part of application Serial No. 08/706,657, filed September 6, 1996, in the names of M. Babu and J. College, and entitled "Process For Removing $SO_2$ and $NO_x$ From A Gaseous Stream", which application is assigned to the assignee of the present application and is incorporated by reference herein.

Field of the Invention

The present invention is to a fertilizer composition in the form of an aqueous solution of an alkaline earth nitrate, and more specifically to such a composition that is produced by scrubbing of a hot combustion gas stream to remove sulfur dioxide and nitrogen oxides therefrom.

BACKGROUND OF THE INVENTION

As described in co-pending application Serial No. 08/706,657, nitrogen oxide removal from hot combustion gas streams, is generally effected by selective catalytic reduction (SCR) processes or selective non-catalytic reduction processes (SNCR). Problems exist with the SCR nitrogen oxide removal processes in that the processes consume a reagent and a catalyst bed, the catalyst being very expensive and subject to deterioration. Common reagents used in SCR processes are ammonia and urea which, in the presence of a catalyst convert NO to $N_2$ and $H_2O$. By-products produced, such as ammonium sulfate and ammonium chloride give negative results in that ammonium sulfate is sticky and has a tendency to foul air preheaters reducing the efficiency of a boiler, while ammonium chloride exits a stack as a particulate material. SCR processes are also hot side processes. The SNCR nitrogen oxide removal processes use reagents that are injected into the gaseous stream at elevated temperatures to reduce NO to $N_2$. These reagents, such as ammonia or urea, are expensive and produce the same by-products as the SCR processes with their attendant disadvantages. The SNCR technology is generally expected to allow 30-50% removal of nitrogen oxides before chemical problems occur downstream of the injection point. The SNCR process is also a hot side process. Both the SCR and SNCR processes require sulfur dioxide removal downstream from the nitrogen oxide removal system, and neither process is very useful with high sulfur content coal combustion gases.

In said co-pending application, Serial No. 08/706,657, there is described a process for removal of sulfur dioxide from a gaseous stream and also removal of nitrogen oxides therefrom, with the sulfur dioxide removed in a first wet scrubbing unit by reaction with an alkaline earth compound, where the reaction products are removed from the first wet scrubbing unit and the gaseous stream humidified. The humidified gaseous stream, after removal of sulfur dioxide and containing nitrogen oxides, is exposed to a coronal discharge which produces nitric acid from the nitrogen oxides present. The humidified gaseous steam is then contacted in a second wet scrubbing unit with an alkaline earth compound which reacts with the nitric acid to form an alkaline earth nitrate in aqueous solution. The aqueous solution is removed as an effluent and the clean gas then discharged to the atmosphere.

Calcium nitrate and magnesium nitrate are known to be useful in fertilizer compositions. One such composition, made in Norway by Norsk Hydro and sold under the name Viking Ship® Calcium Nitrate is identified as a double salt of calcium nitrate and ammonium nitrate and sold as solids of prilled form or granules.

It is an object of the present invention to provide a fertilizer composition containing calcium nitrate or magnesium nitrate where the composition is an effluent of a wet scrubbing process for removing sulfur dioxide and nitrogen oxides from a hot combustion gas stream.

SUMMARY OF THE INVENTION

A fertilizer composition, in the form of an aqueous effluent, is produced by removing sulfur dioxide and nitrogen oxides from a hot combustion gas stream. The sulfur dioxide is first removed from the hot combustion gas stream during humidification of the same and the humidified gas stream, with sulfur dioxide removed but containing nitrogen oxides, is treated to convert nitrogen oxides to nitric acid in the humidified gas stream. The nitric acid-containing gas stream is then contacted in a wet scrubbing unit with an aqueous medium containing an alkaline earth compound such as calcium hydroxide, calcium carbonate, dolomite, or magnesium hydroxide which reacts with the nitric acid to form calcium nitrate or magnesium nitrate, respectfully, in an aqueous effluent. The gas stream is separated from the wet scrubbing unit and an aqueous effluent containing an alkaline earth nitrate is removed from the wet scrubbing unit in the form of a fertilizer composition.

The aqueous effluent containing the alkaline earth nitrate will contain about 40 percent by weight, or more, of calcium nitrate where calcium hydroxide or calcium carbonate are used as the alkaline earth compound for reaction with

the nitric acid, and about 30 percent by weight, or more, of magnesium nitrate where magnesium hydroxide is so used.

Products produced in the sulfur dioxide removal step of the present process, in the form of gypsum or magnesium hydroxide may be added to the aqueous effluent containing the alkaline earth nitrate to enhance the fertilizer composition.

## DETAILED DESCRIPTION

The present invention provides a fertilizer composition comprising calcium nitrate or magnesium nitrate in the form of an aqueous effluent of a sulfur dioxide and nitrogen oxide removal process for cleaning of hot combustion gas streams.

During the removal of sulfur dioxide from the hot combustion gas stream the gas stream is humidified, preferably to substantial saturation. The humidified gas stream, after removal of sulfur dioxide and chlorides therefrom, but still containing $NO_x$ components, is treated to convert the $NO_x$ to nitric acid.

One embodiment of such a treatment involves contacting the gas stream containing $NO_x$, which has been substantially saturated with water, with a coronal discharge unit. The exposure of the humidified gas stream to a coronal discharge effects a reaction of $NO_x$ compounds to produce nitric acid which is entrained in the gas stream. The formation of nitric acid by use of a coronal discharge is believed to follow the following reaction sequence:

Production of oxidizing species by coronal discharge:

$$O_2, H_2O \rightarrow OH, O, HO_2 \qquad (1)$$

Production of nitric acid:

$$(2) \quad NO_x \xrightarrow{OH, O, HO_2} HNO_3.$$

While various coronal discharge systems may be used in the present process, an especially useful system is that described in US 5,458,748, the contents of said patent being incorporated by reference herein. The system described in that patent uses a sulfur tolerant, high water vapor tolerant, packing free coronal catalyst, and optionally suggests the use of downstream scrubbers of wet or dry configuration to absorb particular $NO_x$ reduction products $NO_2$ and $HNO_3$, upon exposure to an arresting agent, including basic, caustic, or alkali materials such as CaO or $NH_3$. Other coronal discharge systems for converting $NO_x$ to nitric acid are described in US 5,147,516 and 5,240,575, the content of both of which are incorporated by reference herein.

Another embodiment of a treatment of a gas stream containing $NO_x$, which has been substantially saturated with water, to produce nitric acid from the $NO_x$ uses an electron beam. Such treatment is known in the art and involves electron beam irradiation of the gas, the electron beam being a kind of ionizing radiation and a flow of electron accelerated by high voltage. In the electron beam process, the high-energy electrons hit the gases breaking them into ions and radicals, the reaction products having a high oxidation potential, with the radicals reacting with $NO_x$, in the presence of water, to produce nitric acid in the form of a mist in the gas stream.

After treating the humidified gas to convert $NO_x$ to nitric acid, the gas stream containing entrained nitric acid is contacted in a wet scrubbing unit with an aqueous medium containing an alkaline earth compound, such as calcium hydroxide, calcium carbonate, dolomite, or magnesium hydroxide, which reacts with nitric acid to form an alkaline earth nitrate, such as by the reactions:

$$(3)\quad 2HNO_3 + Ca(OH)_2 \xrightarrow{H_2O} Ca(NO_3)_2 + 2H_2O;$$

$$(4)\quad 2HNO_3 + CaCO_3 \xrightarrow{H_2O} Ca(NO_3)_2 + H_2CO_3$$

$$(5)\quad 2HNO_3 + Mg(OH)_2 \xrightarrow{H_2O} Mg(NO_3)_2 + 2H_2O.$$

After contact of the humidified gas stream in the wet scrubbing unit with the aqueous medium containing an alkaline earth compound, such as calcium hydroxide, calcium carbonate, dolomite, or magnesium hydroxide, which reacts with the nitric to form an alkaline earth nitrate, the gas stream, which has had both sulfur dioxide and nitrogen oxides removed therefrom, is separated and discharged, while an aqueous effluent containing the alkaline earth nitrate is removed from the wet scrubbing unit.

When calcium hydroxide or calcium carbonate is used, as an aqueous slurry, for contact with the humidified gas stream containing nitric acid to form calcium nitrate, the aqueous slurry should contain at least about 20 weight percent of calcium hydroxide or calcium carbonate, and following contact the aqueous effluent from the wet scrubbing unit will produce a solution of 40 weight percent, or more, by weight of calcium nitrate. When magnesium hydroxide, as an aqueous suspension, is used for contact with the humidified gas stream containing nitric acid to form magnesium nitrate, the aqueous suspension should contain at least about 15 weight percent of magnesium hydroxide, and following contact the aqueous effluent from the wet scrubbing unit will produce a solution of 30 weight percent, and generally about 40 weight percent, or more, of magnesium nitrate.

If desired, gypsum ($CaSO_4 \cdot 2H_2O$) from the wet scrubber effluent of the sulfur dioxide scrubbing unit when lime is used as the $SO_2$ scrubbing medium, or magnesium hydroxide from the wet scrubber effluent of the sulfur dioxide scrubbing unit where a magnesium scrubbing component is used as the $SO_2$ scrubbing medium, may be combined with the alkaline earth nitrate solution. The aqueous fertilizer composition would then contain gypsum and/or magnesium hydroxide in addition to the alkaline earth nitrate, all resulting from a sulfur dioxide and nitrogen oxide removal system to clean a hot combustion gas stream.

In the embodiment of the present invention where the sulfur dioxide removal products are added to the alkaline earth nitrate solution, the hot combustion gas stream containing sulfur dioxide gas and $NO_x$ gases is passed to a first wet scrubbing unit and contacted with an aqueous medium containing an alkaline earth compound which reacts with the sulfur dioxide to form an alkaline earth sulfite. The alkaline earth compound may be limestone in an aqueous slurry, lime or magnesium-enhanced lime as an aqueous slurry, such as described in US 3,919,393 and US 3,919,394, or an aqueous solution or suspension of magnesium hydroxide, such as is described in US 4,996,032 and US 5,039,499. Where limestone or lime are present, calcium sulfite along with calcium bisulfite will be formed, while when magnesium hydroxide is present, magnesium sulfite along with magnesium bisulfite will be formed by reaction with, and removal of, sulfur dioxide from the hot combustion gas stream. The aqueous-medium containing an alkaline earth compound is generally recycled through the wet scrubbing unit through which the hot combustion gas stream is passed, and a bleed stream of a first aqueous effluent containing the produced alkaline earth sulfite is removed, preferably with later treatment of the alkaline earth sulfite effected to produce the desired by-products. Where calcium sulfite is produced, for example, the same would be oxidized to produce gypsum, or where magnesium sulfite is produced, the same would be used to produce magnesium hydroxide or magnesium oxide. Chlorides may also be removed in the sulfur dioxide scrubber, in which case only solids recovered would be used for addition to the present fertilizer composition. The solids content of such aqueous effluents from the sulfur dioxide removal system, where gypsum is present would be about 40-85% by weight solids in water after concentration, such as by centrifuging or filtering.

During contact of the hot combustion gas stream with the aqueous medium containing an alkaline earth compound in the first wet scrubbing unit, the hot combustion gas stream will pick up water so as to become substantially saturated with moisture.

## Claims

1. A process for producing a fertilizer composition, in the form of an aqueous effluent, produced by the removal of sulfur dioxide and $NO_x$ from a hot combustion gas stream comprising:

   removing said sulfur dioxide from said hot combustion gas stream while humidifying said gas stream;
   treating said resultant humidified gas stream containing $NO_x$ to convert said $NO_x$ to nitric acid in said humidified gas stream;
   contacting said humidified gas stream containing nitric acid in a wet scrubbing unit with an aqueous medium containing an alkaline earth compound which reacts with nitric acid to form an alkaline earth nitrate in an aqueous effluent; and
   separating said humidified gas stream from said wet scrubbing unit and removing said aqueous effluent containing an alkaline earth nitrate from said wet scrubbing unit.

2. The process as defined in Claim 1 wherein said hot combustion gas stream is humidified to substantial saturation while removing said sulfur dioxide therefrom.

3. The process as defined in Claim 1 wherein said treating said resultant humidified gas stream containing $NO_x$ to convert said $NO_x$ to nitric acid is effected by exposure thereof to a coronal discharge.

4. The process as defined in Claim 1 wherein said treating said resultant humidified gas stream containing $NO_x$ to convert said $NO_x$ to nitric oxide is effected by exposure thereof to electron beam irradiation.

5. The process as defined in Claim 1 wherein said aqueous medium contains an alkaline earth compound selected from the group consisting of calcium hydroxide, calcium carbonate, dolomite, and magnesium hydroxide.

6. The process as defined in Claim 1 wherein said alkaline earth nitrate is selected from the group consisting of calcium nitrate and magnesium nitrate.

7. The process as defined in Claim 6 wherein said alkaline earth nitrate is calcium nitrate and is present in said aqueous effluent in an amount of at least about 40 percent by weight.

8. The process as defined in Claim 6 wherein said alkaline earth nitrate is magnesium nitrate and is present in said aqueous effluent in an amount of at least about 30 percent by weight.

9. The process as defined in Claim 6 wherein gypsum produced as a product of said removal of sulfur dioxide from said hot combustion gas stream is added to said aqueous effluent.

10. The process as defined in Claim 6 wherein magnesium hydroxide produced as a product of said removal of sulfur dioxide from said hot combustion gas stream is added to said aqueous effluent.

11. A fertilizer composition comprising an aqueous effluent containing an alkaline earth nitrate, formed by contacting a humidified gas stream, after removal of sulfur dioxide therefrom and containing nitric acid, in a wet scrubbing unit with an alkaline earth compound, selected from the group consisting of calcium hydroxide, calcium carbonate, dolomite, and magnesium hydroxide, which alkaline earth compound reacts with said nitric acid to form said alkaline earth nitrate, and separating the resultant aqueous effluent containing said alkaline earth nitrate from said humidified gas stream.

12. The fertilizer composition as defined in Claim 11 wherein said alkaline earth compound is calcium hydroxide and said alkaline earth nitrate is calcium nitrate.

13. The fertilizer composition as defined in Claim 12 wherein said calcium nitrate is present in said aqueous effluent in an amount of at least 40 percent by weight.

14. The fertilizer composition as defined in Claim 12 which also contains gypsum produced from said removal of sulfur dioxide from said gas stream.

15. The fertilizer composition as defined in Claim 12 which also contains magnesium hydroxide produced from said

removal of sulfur dioxide from said gas stream.

**16.** The fertilizer composition as defined in Claim 11 wherein said alkaline earth compound is magnesium hydroxide and said alkaline earth nitrate is magnesium nitrate.

**17.** The fertilizer composition as defined in Claim 16 wherein said magnesium nitrate is present in an amount of at least 30 percent by weight.

**18.** The fertilizer composition as defined in Claim 16 which also contains gypsum produced from said removal of sulfur dioxide from said gas stream.

**19.** The fertilizer composition as defined in Claim 16 which also contains magnesium hydroxide produced from said removal of sulfur dioxide from said gas stream.